# EUROPÄISCHE PATENTSCHRIFT

(11) **EP 2 988 157 B1**
(45) Veröffentlichungstag und Bekanntmachung des Hinweises auf die Patenterteilung: **09.06.2021**
(21) Anmeldenummer: 15178591.2
(22) Anmeldetag: 28.07.2015
(51) Int. Cl.: G02B 21/36, G02B 21/16

(54) **VERFAHREN ZUR ABBILDUNG EINER PROBE MITTELS EINES MIKROSKOPS UND MIKROSKOP**
METHOD FOR IMAGING A SAMPLE BY MEANS OF A MICROSCOPE AND MICROSCOPE
PROCÊDÊ DE REPRÊSENTATION D'UN ÊCHANTILLON À L'AIDE D'UN MICROSCOPE ET MICROSCOPE

(30) Priorität: 21.08.2014 DE 102014112002
(43) Veröffentlichungstag der Anmeldung: 24.02.2016
(73) Patentinhaber: Carl Zeiss Microscopy GmbH, 07745 Jena (DE)
(72) Erfinder: HEUPEL, Thorsten, 81477 München (DE)
(74) Vertreter: Patentanwälte Geyer, Fehners & Partner mbB

(56) Entgegenhaltungen:
- EP-A2- 0 986 245
- EP-A2- 1 511 293
- WO-A1-2004/038483
- JP-A- H08 340 558
- JP-A- 2009 053 116
- US-A1- 2004 234 114
- US-A1- 2013 329 033
- US-A1- 2014 198 197

## Beschreibung

Die vorliegende Erfindung betrifft ein Verfahren zur Abbildung einer Probe mittels eines Mikroskops sowie eine Mikroskop.

Bei einem Verfahren zur Abbildung einer Probe mittels eines Mikroskops, das zumindest eine Beleuchtungseinheit, eine Abbildungsoptik und einen Bildsensor aufweist, kann zur Abbildung ein Bereich der Probe mittels der Beleuchtungseinheit mit Beleuchtungsstrahlung beleuchtet und der beleuchtete Probenbereich mittels der Abbildungsoptik vergrößert auf den Bildsensor abgebildet und ein Bild des beleuchteten Probenbereichs mit einer vorbestimmten Anzahl von Bildpixeln aufgenommen werden. Ein solches Verfahren ist beispielsweise aus der WO 2004/038483 A1, der US 2004/234114 A1 und der EP 1 511 293 A2 bekannt.

Es besteht häufig die Schwierigkeit, dass die Beleuchtung der Probe mittels der Beleuchtungseinheit nicht optimal ist. Somit kann ein systematischer Fehler verbleiben, der sich z.B. in einer ungleichmäßigen Helligkeitsverteilung der Beleuchtung über die Probe wiederspiegelt. Auch die Abbildungsoptik ist häufig nicht optimal. Sie kann eine unerwünschte Inhomogenität in dem aufgenommenen Bild bewirken.

Ausgehend hiervon ist es Aufgabe der Erfindung, ein Verfahren zur Abbildung einer Probe mittels eines Mikroskops bereitzustellen, bei dem diese Schwierigkeit möglichst vollständig behoben wird. Ferner soll ein entsprechendes Mikroskop bereitgestellt werden.

Erfindungsgemäß wird die Aufgabe durch ein Verfahren zur Abbildung einer Probe mittels eines Mikroskops gelöst, das eine Beleuchtungseinheit, eine Abbildungsoptik und einen Bildsensor aufweist, wobei zur Abbildung folgende Schritte ausgeführt werden:
a) ein Bereich der Probe wird mittels der Beleuchtungseinheit mit Beleuchtungsstrahlung beleuchtet,
b) der beleuchtete Probenbereich wird mittels der Abbildungsoptik vergrößert auf den Bildsensor abgebildet und ein Bild des beleuchteten Probenbereiches wird mit einer vorbestimmten Anzahl von Bildpixeln aufgenommen,
c) eine Mehrzahl von unterschiedlichen Bereichen einer oder mehrerer Vergleichsproben wird bereitgestellt,
d) an jedem im Schritt c) bereitgestellten Vergleichsprobenbereich wird eine Referenzmessung durchgeführt, wobei jeweils der Vergleichsprobenbereich mittels der Beleuchtungseinheit mit Beleuchtungsstrahlung beleuchtet und mittels der Abbildungsoptik vergrößert auf den Bildsensor abgebildet und als Referenzbild mit der vorbestimmten Anzahl von Bildpixeln aufgenommen wird,
e) ein Helligkeitskorrekturbild mit der vorbestimmten Anzahl von Bildpixeln wird ermittelt, in dem der Wert für jedes Bildpixel des Helligkeitskorrekturbildes aus den Werten von zugeordneten Bildpixeln der Referenzbilder ermittelt wird, wobei eine Mitteilung der Werte der zugeordneten Bildpixel der Referenzbilder durchgeführt wird, und
f) das mittels der Schritte a) und b) aufgenommene Bild des Bereiches der Probe wird basierend auf dem Helligkeitskorrekturbild korrigiert und als korrigiertes Bild ausgegeben.

Durch die Aufnahme der Mehrzahl von unterschiedlichen Bereichen kann z.B. eine systematisch bedingte Ungleichmäßigkeit der Beleuchtung im Schritt e) ermittelt und ein entsprechendes Helligkeitskorrekturbild bereitgestellt werden. Damit kann in einfacher Art und Weise eine Korrektur der Ungleichmäßigkeit der Beleuchtung erreicht werden.

Mit dem erfindungsgemäßen Verfahren können somit alle Inhomogenitäten beseitigt oder reduziert werden, die durch den beleuchtungsseitigen Strahlengang und/oder abbildungsseitigen Strahlengang bedingt sind. Dabei kann es sich insbesondere um Filter (soweit vorhanden), Objektive, Kondensor (wenn vorhanden), Tubuslinse, Bildsensor, etc. handeln. In der Regel ist der unerwünschte störende Einfluss beleuchtungsseitig größer als abbildungsseitig.

Mit dem erfindungsgemäßen Verfahren können somit systematisch bedingte Inhomogenitäten und/oder unerwünschte Helligkeitsvariationen im aufgenommenen Bild verringert werden.

Im Schritt e) wird zur Ermittlung der Bildpixelwerte des Helligkeitskorrekturbildes eine Mittelung der Werte der zugeordneten Bildpixel der Referenzbilder durchgeführt. Eine solche Mittelung lässt sich leicht und schnell berechnen und führt zu guten Ergebnissen.

Bei der Mittelung kann es sich um eine arithmetische Mittelung handeln. Ferner ist es möglich, eine gewichtete Mittelung durchzuführen.

Im Schritt e) können die Werte der zugeordneten Bildpixel gefiltert und nur die Werte der zugeordneten Bildpixel bei der Ermittlung der Bildpixelwerte des Helligkeitskorrekturbildes berücksichtigt werden, die ein vorbestimmtes Filterkriterium der Filterung erfüllen. So können z.B. sogenannte Ausreißer herausgefiltert werden, die deutlich außerhalb des zu erwartenden Helligkeitsbereichs liegen.

Ferner ist es möglich, vor dem Schritt e) Referenzbilder, die über- oder unterbelichtet sind, auszusortieren und im Schritt e) nicht zu berücksichtigen. Die Bestimmung, ob ein Bild über-oder unterbelichtet ist, kann in üblicher Art und Weise durchgeführt werden. Somit können erfindungsgemäß über- oder unterbelichtete Bilder aussortiert und bei der Ermittlung der Bildpixelwerte des Helligkeitskorrekturbildes nicht berücksichtigt werden, so dass das Helligkeitskorrekturbild besser den systematischen Fehler der Beleuchtung wiederspiegelt.

Bei dem Schritt c) kann eine Vergleichsprobe die abzubildende Probe selbst sein.

Insbesondere kann bei dem erfindungsgemäßen Verfahren der Bildsensor einen linearen Detektionsbereich aufweisen und können im Schritt e) nur Bildpixel der Referenzbilder berücksichtigt werden, deren Wert im linearen Detektionsbereich des Bildsensors liegt. Unter dem linearen Detektionsbereich des Bildsensors würde insbesondere der Bereich verstanden, der bei einer linearen Zunahme der Helligkeit zu einer linearen Zunahme des gemessenen Wertes führt. Mit diesem Vorgehen kann die Genauigkeit bei der Bestimmung des Helligkeitskorrekturbildes verbessert werden.

Ferner können laufend die im Schritt b) aufgenommenen Bilder als Referenzbilder im Schritt e) benutzt werden. Damit wird eine laufende Verbesserung des ermittelten Helligkeitskorrekturbildes erreicht. Auch können auf diese Art und Weise Änderungen in der Ungleichmäßigkeit der Beleuchtung über die Zeit kompensiert werden.

Bei den Proben kann es sich insbesondere um fluoreszierende Proben handeln.

Im Schritt e) kann jedem Bildpixel des Helligkeitskorrekturbildes genau ein Bildpixel des jeweiligen Referenzbildes zugeordnet sein.

Bei dem erfindungsgemäßen Verfahren können ferner im Schritt e) jedem Bildpixel des Helligkeitskorrekturbildes mehrere Bildpixel des jeweiligen Referenzbildes zugeordnet sein. So kann z.B. jedem Bildpixel des Helligkeitskorrekturbildes ein erstes Bildpixel des jeweiligen Referenzbildes sowie zumindest ein zweites Pixel des jeweiligen Referenzbildes, das an das erste Pixel angrenzt, zugeordnet sein.

Bei der Ermittlung der Bildpixelwerte des Helligkeitskorrekturbildes kann ferner das zumindest eine zweite Pixel geringer gewichtet werden als das erste Pixel. Insbesondere kann die Gewichtung so gewählt werden, dass sie mit größer werdendem Abstand vom ersten Pixel abnimmt. Es ist auch möglich, dass alle Pixel gleich gewichtet werden.

Bei dem erfindungsgemäßen Verfahren können im Schritt c) mindestens 100 unterschiedliche Bereich bereitgestellt werden. Insbesondere können auch mindestens 200, 300 oder 400 unterschiedliche Bereiche bereitgestellt werden. Besonders vorteilhaft sind ca. 300 unterschiedliche Bereiche, wie sich bei theoretischen und praktischen Testungen gezeigt hat.

Bei dem erfindungsgemäßen Verfahren kann als eine Vergleichsprobe im Schritt c) die abzubildende Probe benutzt werden, wobei dann die Aufnahmen der Probe für die Ermittlung des Helligkeitskorrekturbildes benutzt werden können und das so ermittelte Helligkeitskorrekturbild bei der Korrektur der Aufnahmen der Probe gemäß Schritt f) eingesetzt wird. Somit können die Aufnahmen der Probe einerseits zur Ermittlung des Helligkeitskorrekturbildes benutzt werden und andererseits gleich als gewünschte Aufnahmen gemäß Schritt a) und b) mit dem dann ermittelten Helligkeitskorrekturbild korrigiert und weiterverarbeitet werden.

Somit kann eine probenspezifische Korrektur realisiert werden, bei der Inhomogenitäten, die durch die Probe bedingt sind (z.B. Bleichverhalten) gut korrigiert werden können.

Es wird ferner ein Mikroskop mit einer Beleuchtungseinheit, einer Abbildungsoptik, einem Bildsensor und einer Steuereinheit, die so ausgebildet ist, dass sie die Schritte des erfindungsgemäßen Verfahrens (einschließlich seiner Weiterbildungen) durchführt, bereitgestellt.

Das Mikroskop kann insbesondere als sogenannter Slide-Scanner ausgebildet sein. Ein solcher Slide-Scanner kann ein Magazin aufweisen, in dem mehrere Objektträger mit drauf fixierten Proben angeordnet werden können. Die in dem Magazin gehalterten Objektträger können dann automatisch nacheinander vergrößert abgebildet werden. Insbesondere ist eine Durchlichtaufnahme und/oder eine Auflichtaufnahme möglich. Das Mikroskop kann als Fluoreszenzmikroskop ausgebildet sein. Insbesondere kann es mehrere Fluoreszenzkanäle aufweisen.

Das Mikroskop kann insbesondere einen Anregungsfilter im Beleuchtungsstrahlengang und/oder einen Emissionsfilter im Abbildungsstrahlengang aufweisen. Ferner oder zusätzlich ist ein Farbteiler vorgesehen, der bevorzugt im Beleuchtungs- und Abbildungsstrahlengang angeordnet ist. Diese Filter werden insbesondere vorgesehen, wenn das Mikroskop als Fluoreszenzmikroskop ausgebildet ist.

Die erfindungsgemäße Erzeugung und Berücksichtigung des Helligkeitskorrekturbildes kann ab Werk, vor der Inbetriebnahme und/oder im Betrieb des Mikroskops erfolgen. Insbesondere kann sie im laufenden Betrieb erfolgen.

Es ist auch möglich, die mittels des Mikroskops aufgenommenen Bilder im Nachhinein mittels des Helligkeitskorrekturbildes zu korrigieren. Bevorzugt erfolgt jedoch die Korrektur schon während der Aufnahme und Ausgabe der Bilder. Natürlich kann das Mikroskop auch so ausgebildet sein, dass die aufgenommenen Bilder als Rohdaten erhalten bleiben und die mittels des Helligkeitskorrekturbildes korrigierten Bilder erzeugt und ebenfalls ausgegeben werden.

Es versteht sich, dass die vorstehend genannten und die nachstehend noch zu erläuternden Merkmale nicht nur in den angegebenen Kombinationen, sondern auch in anderen Kombinationen oder in Alleinstellung einsetzbar sind, ohne den Rahmen der vorliegenden Erfindung zu verlassen.

Nachfolgend wird die Erfindung beispielsweise anhand der beigefügten Zeichnungen, die auch erfindungswesentliche Merkmale offenbaren, noch näher erläutert. Es zeigen:
- Fig. 1: eine schematische Darstellung einer Ausführungsform des erfindungsgemäßen Mikroskops;
- Fig. 2: ein Diagramm zur Erläuterung der Ungleichmäßigkeit der Beleuchtung mittels der Beleuchtungseinheit 2, 3 des Mikroskops 1 von Fig. 1;
- Fig. 3: eine schematische Darstellung von Helligkeitswerten einer Probe bei idealer Beleuchtung;
- Fig. 4: eine Darstellung gemäß Fig. 3 unter Berücksichtigung der Beleuchtung gemäß Fig. 2;
- Fig. 5: ein Diagramm zur Erläuterung des ermittelten Helligkeitskorrekturbildes;
- Fig. 6: eine Darstellung zur Erläuterung der 1:1-Zuordnung zwischen einem Bildpixel des Helligkeitskorrekturbild und den Bildpixeln der Referenzbilder;
- Fig. 7: eine schematische Darstellung zur Erläuterung einer 1 :n-Zuordnung eines Pixels des Helligkeitskorrekturbildes zu den Pixeln der Referenzbilder, und
- Fig. 8: eine weitere Darstellung zur Erläuterung der 1 :n-Zuordnung eines Pixels des Helligkeitskorrekturbildes zu den Pixeln der Referenzbilder.

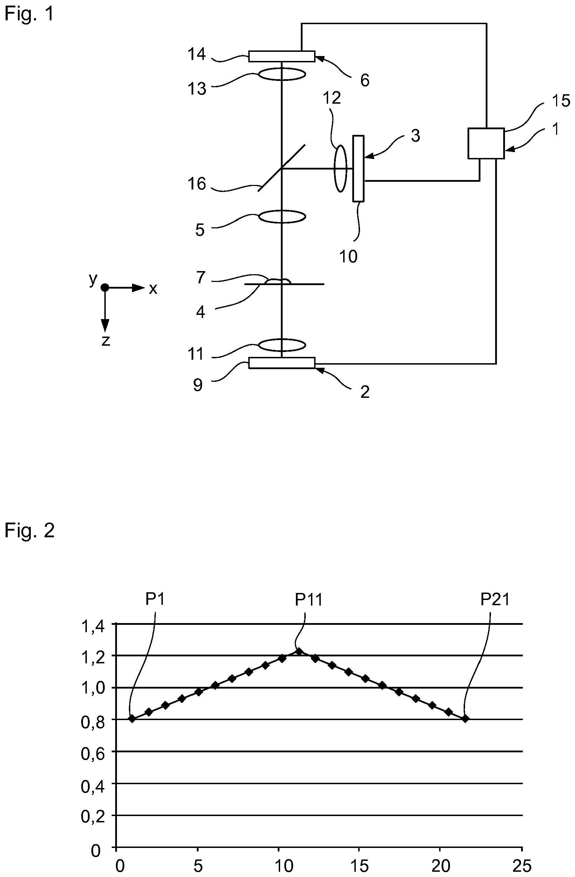

Bei der in Fig. 1 gezeigten Ausführungsform umfasst das erfindungsgemäße Mikroskop 1 eine Durchlichtbeleuchtungseinheit 2, eine Auflichtbeleuchtungseinheit 3, einen Probentisch 4, eine Abbildungsoptik 5 sowie eine Aufnahmeeinheit 6.

Das erfindungsgemäße Mikroskop 1 kann als Durchlicht-Mikroskop betrieben werden, bei dem eine auf dem Probentisch 4 angeordnete Probe 7 bzw. ein Bereich der Probe 7 von unten mittels der Durchlichtbeleuchtungseinheit 2 beleuchtet wird und von oben mittels der Abbildungsoptik 5 vergrößert von der Aufnahmeeinheit 6 aufgenommen werden kann. Mittels der Aufnahmeeinheit 6 kann dann das gewünschte Bild des beleuchteten Probenbereiches aufgenommen werden, wobei das aufgenommene Bild eine vorbestimmte Anzahl von Bildpixeln aufweist.

Das erfindungsgemäße Mikroskop 1 kann ferner als Auflicht-Mikroskop betrieben werden, bei dem die auf dem Probentisch 4 angeordnete Probe 7 bzw. ein Bereich der Probe 7 von oben mittels der Auflichtbeleuchtungseinheit 3 beleuchtet und von oben mittels der Abbildungsoptik 5 vergrößert von der Aufnahmeeinheit 6 aufgenommen werden kann.

Die beiden Beleuchtungseinheiten 2, 3 weisen jeweils eine Lichtquelle 9, 10 (z.B. eine LED-Lichtquelle, eine Laser-Lichtquelle oder eine Quecksilber-Lampe) sowie eine Beleuchtungsoptik 11, 12 auf. Die Aufnahmeeinheit 6 umfasst eine Aufnahmeoptik 13 und einen Bildsensor 14. Bei dem Bildsensor 14 kann es sich beispielsweise um einen CCD-Sensor oder einen CMOS-Sensor handeln.

Die Durchlichtbeleuchtungseinheit 2 kann z.B. Licht in einem Wellenlängenbereich von 400 - 700 nm abgeben. Die Auflichtbeleuchtungseinheit 3 kann beispielsweise für Fluoreszenzaufnahmen eingesetzt werden. Sie kann beispielsweise Strahlung mit einer Wellenlänge von 365 nm, 385 nm, 420 nm, 445 nm, 455 nm, 470 nm, 505 nm, 530 nm, 590 nm, 615 nm oder 625 nm (bevorzugt auswählbar) abgegeben. Auch Strahlung mit einem Wellenlängenbereich von 540 - 580 nm sind möglich. Natürlich sind auch andere Wellenlängen je nach Art der Lichtquelle zur Fluoreszenzanregung möglich.

Die Lichtquellen 9, 10 und der Bildsensor 14 sind mit einer Steuereinheit 15 des Mikroskops 1 verbunden, die einerseits während des Betriebs die Lichtquellen 9, 10 ansteuert und andererseits die Bilddaten des Bildsensors 14 empfängt. Ferner sind noch ein Strahlteiler 16, der für die Auflichtbeleuchtung genutzt wird, um über den Strahlteiler 16 das Licht der Lichtquelle 10 in den Abbildungsstrahlengang des Mikroskops 1 einzukoppeln, sowie ein Anregungsfilter 17 und ein Emissionsfilter 18 vorgesehen

Der Strahlteiler 16 sowie die beiden Filter 17 und 18 sind motorisiert und können somit in den Strahlengang eingeschwenkt und aus dem Strahlengang ausgeschwenkt werden. Die Elemente 16 - 18 sind in den Strahlengang für Fluoreszenzaufnahmen eingeschwenkt, wobei ihre optischen Eigenschaften bezüglich Transmission und Reflexion so gewählt sind, dass sie im Zusammenspiel mit der Strahlung der Lichtquelle 10 spezifische Farbstoffe anregen und spezifische Fluoreszenzemissionen ausfiltern können.

Die Darstellung in Figur 1 ist sehr schematisch. Das erfindungsgemäße Mikroskop kann weitere Elemente aufweisen, die zu seinem Betrieb notwendig ist. Auch kann das erfindungsgemäße Mikroskop 1 so ausgebildet sein, dass nur die Durchlichtbeleuchtungseinheit 2 oder die Auflichtbeleuchtungseinheit 3 vorgesehen ist. Des weiteren ist es möglich, dass der Probentisch 4 zumindest in der x- und der y-Richtung bewegbar ist. Diese Bewegung ist bevorzugt motorgetrieben und kann über die Steuereinheit 15 angesteuert werden. Auch eine Bewegung in der z-Richtung ist möglich. Die Bewegung in z-Richtung kann durch Bewegung des Probentisches 4 und/oder der Abbildungsoptik 5 in z-Richtung verwirklicht werden. Ferner kann die Abbildungsoptik 5 auswechselbar sein, so dass verschiedene optische Vergrößerungen für die Abbildung der Probe 7 eingestellt werden können.

Das erfindungsgemäße Mikroskop 1 kann insbesondere als sogenannter Slide-Scanner ausgebildet sein, bei dem mehrere in einem nicht gezeigten Magazin des Mikroskops 1 angeordnete Objektträger mit darauf vorgesehenen Proben (beispielsweise fixierte Gewebeschnitte) automatisch nacheinander in die Position des Probentisches 4 (der in diesem Fall beispielsweise entfallen kann) gebracht werden und danach die gewünschten Aufnahmen durchgeführt werden. Es ist ferner möglich, dass der Slide-Scanner so ausgebildet ist, dass die jeweilige Probe zusammen mit dem Objektträger mittels einer Transfereinheit vom Magazin zum Probentisch 4 bewegt und dort abgelegt wird. Die Transfereinheit kann dann den Objektträger mit der Probe nach Durchführung der gewünschten Aufnahme zurück zum Magazin transportieren.
Nachdem die Beleuchtung bzw. Ausleuchtung des aufgenommenen Bereiches mittels der Beleuchtungseinheit 2, 3 in der Regel nicht ideal ist, weist das aufgenommene Bild Bildfehler auf, die durch eine nicht ideale Beleuchtung bedingt sind. Weiterhin haben auch die Abbildungsoptik 5 sowie die Elemente 16 - 18, die z.B. für Fluoreszenzaufnahmen vorgesehen sein können, einen negativen Einfluss, der zu Bildfehlern führen kann. Ganz allgemein können alle im optischen Strahlengang (Beleuchtungsstrahlengang und Abbildungsstrahlengang) enthaltenen optischen Elemente Bildfehler bewirken.

Daher wird erfindungsgemäß das aufgenommene Bild, wie nachfolgend im Detail beschrieben wird, basierend auf einem Helligkeitskorrekturbild korrigiert und als korrigiertes Bild ausgegeben. Das Helligkeitskorrekturbild enthält Angaben über die Unebenheit der Beleuchtung, die bevorzugt unabhängig von der gerade aufgenommenen Probe sind. Die durchgeführte Korrektur basierend auf dem Helligkeitskorrekturbild kann auch als "Shading"-Korrektur bezeichnet werden.

Das Helligkeitskorrekturbild weist bevorzugt die gleiche vorbestimmte Anzahl von Bildpixeln wie das aufgenommene Bild auf. Ferner wird bevorzugt ein Helligkeitskorrekturbild für die Aufnahmeeinstellungen erzeugt, mit denen der Probenbereich der Probe 7 aufgenommen wurde bzw. werden soll. Dabei kann es sich insbesondere um Einstellungen der Beleuchtungseinheit 2, 3 handeln, wie z.B. die Wellenlänge des eingesetzten Beleuchtungslichtes.

Zur Ermittlung des Helligkeitskorrekturbildes werden mittels des erfindungsgemäßen Mikroskops 1 eine Mehrzahl von unterschiedlichen Bereichen einer oder mehrerer Vergleichsproben als Referenzbilder mit der vorbestimmten Anzahl von Bildpixeln aufgenommen. Diese Referenzbilder werden pixelweise gemittelt, so dass ein Mittelwert-Bild vorliegt, bei dem durch die Mittlung die individuellen Strukturen der aufgenommenen Probenbereiche möglichst vollständig eliminiert sind. Das Mittelwert-Bild enthält bevorzugt somit nur noch die konstanten und daher probenunabhängigen Fehler des erfindungsgemäßen Mikroskops. Das Mittelwert-Bild kann somit als Helligkeitskorrekturbild verwendet werden. Beispielsweise kann von dem aufgenommenen Bild pixelweise der entsprechende Helligkeitswert des Helligkeitskorrekturbildes abgezogen werden.

Das Prinzip der Mittlung des Helligkeitskorrekturbildes soll nachfolgend an einer Pixelreihe entlang einer vorbestimmten Richtung (z.B. die x-Richtung) von 21 Pixeln aus der vorbestimmten Anzahl von Pixeln, die durch den Bildsensor 6 bereitgestellt werden, theoretisch erläutert werden.

In Fig. 2 sind entlang der Abszisse die Pixel und entlang der Ordinate die Helligkeitswerte der Beleuchtung in der Probenebene dargestellt. Die Helligkeitswerte sind hier so normiert, dass der Mittelwert 1 beträgt. Es wird angenommen, dass die in Fig. 2 gezeigte Wölbung vorliegt, so dass z.B. das elfte Pixel P11 einen Wert von knapp über 1,2 aufweist und das erste und letzte Pixel P1 und P21 einen Wert von etwa 0,8 aufweisen. Dies ist eine Simulation einer schematischen Inhomogenität der Beleuchtung und darauf wird nachfolgend stellvertretend für die durch den Beleuchtungs- und Abbildungsstrahlengang des Mikroskops 1 erzeugten systematischen Bildfehler der Aufnahme bei der weiteren Beschreibung des erfindungsgemäßen Mikroskops und des erfindungsgemäßen Verfahrens Bezug genommen.

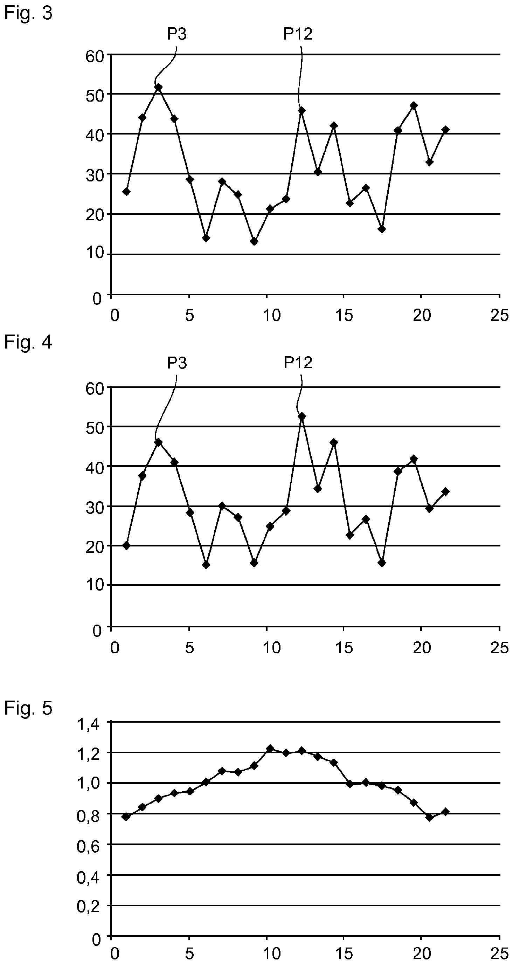

In Fig. 3 sind Helligkeitswerte einer Probe für die betrachteten 21 Pixel dargestellt, die sich ergeben würden, wenn die Beleuchtung ideal und somit eben wäre. In Fig. 3 sind dabei wiederum entlang der Abszisse die Pixel und entlang der Ordinate die Helligkeitswerte in beliebigen Einheiten aufgetragen. Diese Werte wurden mit Zufallszahlen kreiert, um so eine Probe zu simulieren.

Aufgrund der Unebenheit der Beleuchtung gemäß Fig. 2 ergeben sich jedoch in der Aufnahme und somit im Referenzbild dann die in Fig. 4 gezeigten Helligkeitswerte. Diese Werte ergeben sich durch eine Verrechnung der Werte von Fig. 2 und 3 mittels einer Multiplikationsoperation. Wie sich aus der Darstellung gemäß Fig. 4 im Vergleich zu Fig. 3 ergibt, ist z.B. der Helligkeitswert für das dritte Pixel P3 zu niedrig und ist der Helligkeitswert für das zwölfte Pixel P12 zu hoch.

Wenn man nun eine Vielzahl von unterschiedlichen Proben 7 oder Probenbereichen aufnimmt und über alle Aufnahmen (bzw. Referenzbilder) jeweils die Werte eines Pixels mittelt und diese gemittelten Werte auf 1 normiert, erhält man z.B. das in Fig. 5 gezeigte Helligkeitskorrekturbild (die Darstellung in Fig. 5 entspricht der Darstellung gemäß Fig. 2).

Für das Helligkeitskorrekturbild gemäß Fig. 5 wurden 300 zufällig erzeugte Proben (Pixelverläufe gemäß Fig. 3) mit der Beleuchtungsverteilung gemäß Fig. 2 verrechnet und danach pixelweise gemittelt. Die Bildfeldwölbung des Helligkeitskorrekturbildes weist einen Restfehler auf, der im Bereich von maximal ± 5 % liegt. Somit konnte die Beleuchtungsunebenheit mit einem Fehler von nur ± 5 % aus den aufgenommenen Referenzbildern ermittelt werden. Wird die Anzahl der zufällig erzeugten Proben erhöht, so verbessert sich der Wert weiter.

Versuche mit realen Proben kamen zu gleichen Ergebnissen.

Mit der durchgeführten Mittelwertbildung für jedes Pixel kann man die strukturellen Anteile der aufgenommenen Bereiche der Vergleichsproben aus den Aufnahmen (bzw. Referenzbildern) herausfiltern, so dass das so generierte Helligkeitskorrekturbild die systematischen und somit probenunabhängigen Fehler des Mikroskops 1 wiederspiegelt.

Wenn mehrere Kanäle zur Anwendung kommen, wird für jeden Kanal bevorzugt ein separates Helligkeitskorrekturbild erzeugt. Dies gilt insbesondere für Fluoreszenzapplikationen.

Die Mittelwertbildung kann z.B. eine arithmetische Mittelwertbildung sein. Es ist jedoch auch eine gewichtete Mittelwertbildung möglich. Des weiteren ist es möglich, einen Filter bei der Mittelwertbildung anzuwenden, der z.B. Ausreißer, also Bildpixel der Referenzbilder, die deutlich zu hell oder zu dunkel sind, erkennt und herausfiltert, so dass sie bei der Mittelwertbildung nicht berücksichtigt werden. Ferner können insgesamt über- oder unterbelichtete Bilder aus der Mittelwertbildung ausgeschlossen werden. Als Filter kann z.B. ein Gauß-Filter, ein Sigma-Filter und/oder ein Tiefpassfilter verwendet werden.

Des weiteren können z.B. nur die Werte der Referenzbilder, die im linearen Bereich des Bildsensors liegen, bei der Mittelwertbildung berücksichtigt werden.

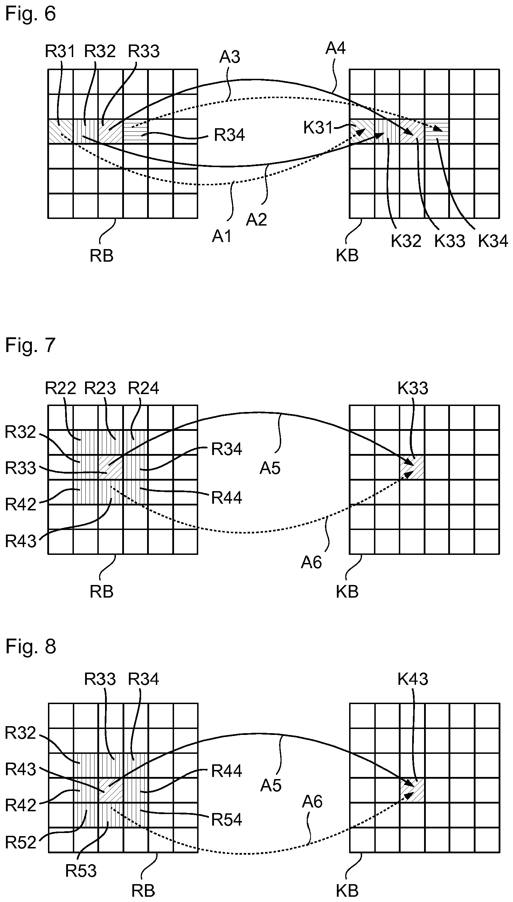

Bisher wurde davon ausgegangen, dass für den Helligkeitskorrekturwert eines Pixels des Helligkeitskorrekturbildes KB nur die entsprechenden Bildpixel der Referenzbilder RB berücksichtigt werden, wie dies in Fig. 6 schematisch für die Pixel R31, R32, R33 und R34 eines stellvertretend gezeigten Referenzbildes RB und die Pixel K31, K32, K33 und K34 des Helligkeitskorrekturenbildes KB durch Schraffuren und Pfeile A1, A2, A3 und A4 dargestellt ist. Dies entspricht einer 1:1-Zuordnung des jeweiligen Bildpixels des Helligkeitskorrekturbildes KB zu den entsprechenden Bildpixeln der Referenzbilder RB. Es ist jedoch eine 1 :n-Zuordnung möglich. In diesem Fall können z.B. noch angrenzende Pixel der Referenzbilder RB bei der Ermittlung des Mittelwertes für das entsprechende Bildpixel des Helligkeitskorrekturbildes berücksichtigt werden.

Eine solche 1:n-Zuordnung ist schematisch in Figur 7 und 8 gezeigt. Bei der Darstellung gemäß Figur 7 sind dem Pixel K33 des Helligkeitskorrekturbildes KB neben dem Pixel R33 der Referenzbilder RB noch die dieses Pixel umgebenden Pixel R22, R23, R24, R32, R34, R42, R43 und R44 zugeordnet.

Dem Pixel K43 des Helligkeitskorrekturbildes KB sind, wie in Fig. 8 angedeutet ist, neben dem Pixel R43 der Referenzbilder RB noch die dieses Pixel umgebenden Pixel R32, R33, R34, R42, R44, R52, R53 und R54 der Referenzbilder RB zugeordnet.

Natürlich können auch noch mehr Pixel der Referenzbilder RB einem Pixel des Helligkeitskorrekturbildes KB zugeordnet sein. Es sind dann nicht nur die unmittelbaren Nachbarn eines entsprechenden Pixels der Referenzbilder RB sondern auch weiter entfernte Nachbarn.

Diese weiteren Bildpixel können gewichtet berücksichtigt werden, so dass mit größerem Abstand eine geringere Gewichtung vorliegt. Dies ist in Fig. 7 und 8 durch die Schraffuren und Pfeile A5 und A6 angedeutet. So kann z.B. das jeweilige 1:1 -Pixel (in Fig. 7 ist dies R33 und in Fig. 8 ist dies R43, Pfeil A5) mit einer höheren Gewichtung berücksichtigt werden als die umgebenen Pixel (R22, R23, R24, R32, R34, R42, R43 und R44 sowie R32, R33, R34, R42, R44, R52, R53 und R54, Pfeil A6).

Die beschriebenen erfindungsgemäßen Verfahren können als offline-Verfahren und/oder als online-Verfahren eingesetzt werden.

Bei dem offline-Verfahren werden die Aufnahmen in der beschriebenen Art und Weise durchgeführt und daraus das Helligkeitskorrekturbild erzeugt. Diese Aufnahmen werden ohne Korrektur mittels eines Helligkeitskorrekturbildes und somit ohne Shading-Korrektur durchgeführt. Das so erzeugte Helligkeitskorrekturbild wird dann im erfindungsgemäßen Mikroskop hinterlegt und kann bei weiteren Aufnahmen zur Helligkeitskorrektur verwendet werden.

Bei dem online-Verfahren kann anhand der einzelnen Aufnahmen bzw. Einzelbilder der Probe, die zu ihrer Digitalisierung aufgenommen werden, gleich ein Helligkeitskorrekturbild erzeugt werden, das dann zur Helligkeitskorrektur der gewünschten Aufnahmen (bzw. Einzelbilder) der Probe eingesetzt wird.

Mit diesem Vorgehen des online-Verfahrens kann in vorteilhafter Weise erreicht werden, dass nicht nur gerätespezifische Inhomogenitäten eliminiert werden, sondern sogar präparatspezifische Inhomogenitäten (z.B. Bleichverhalten).

Das erfindungsgemäße Verfahren kann insbesondere so ausgebildet sein, dass der Benutzer vor der Durchführung der Aufnahmen der Probe und somit vor der Digitalisierung der Probe festlegen kann, ob er das offline-Verfahren oder das online-Verfahren benutzen will. Insbesondere kann das erfindungsgemäße Mikroskop 1 so ausgebildet sein, dass die Wahl des Verfahrens (offline-Verfahren oder online-Verfahren) möglich ist.

Die aufzunehmende Probe kann in einem Bild oder in mehreren Teilbildern aufgenommen werden. Das Prinzip der beschriebenen Helligkeitskorrektur bleibt dabei aber das gleiche.

## Patentansprüche

1. Verfahren zur Abbildung einer Probe mittels eines Mikroskops, das zumindest eine Beleuchtungseinheit, eine Abbildungsoptik und einen Bildsensor aufweist, wobei zur Abbildung folgende Schritte ausgeführt werden:
a) ein Bereich der Probe wird mittels der Beleuchtungseinheit mit Beleuchtungsstrahlung beleuchtet und
b) der beleuchtete Probenbereich wird mittels der Abbildungsoptik vergrößert auf den Bildsensor abgebildet und ein Bild des beleuchteten Probenbereiches wird mit einer vorbestimmten Anzahl von Bildpixeln aufgenommen,
**dadurch gekennzeichnet, dass**
c) eine Mehrzahl von unterschiedlichen Bereichen einer oder mehrerer Vergleichsproben bereitgestellt wird,
d) an jedem im Schritt c) bereitgestellten Vergleichsprobenbereich eine Referenzmessung durchgeführt wird, wobei jeweils der Vergleichsprobenbereich mittels der Beleuchtungseinheit mit Beleuchtungsstrahlung beleuchtet und mittels der Abbildungsoptik vergrößert auf den Bildsensor abgebildet und als Referenzbild mit der vorbestimmten Anzahl von Bildpixeln aufgenommen wird,
e) ein Helligkeitskorrekturbild mit der vorbestimmten Anzahl von Bildpixeln ermittelt wird, in dem der Wert für jedes Bildpixel des Helligkeitskorrekturbildes aus den Werten von zugeordneten Bildpixeln der Referenzbilder ermittelt wird, wobei eine Mittelung der Werte der zugeordneten Bildpixel der Referenzbilder durchgeführt wird, und
f) das mittels der Schritte a) und b) aufgenommene Bild des Bereiches der Probe basierend auf dem Helligkeitskorrekturbild korrigiert und als korrigiertes Bild ausgegeben wird.

2. Verfahren nach Anspruch 1, bei dem im Schritt e) die Werte der zugeordneten Bildpixel gefiltert und nur die Werte der zugeordneten Bildpixel bei der Ermittlung der Bildpixelwerte des Helligkeitskorrekturbildes berücksichtigt werden, die ein vorbestimmtes Filterkriterium der Filterung erfüllen.

3. Verfahren nach einem der obigen Ansprüche, bei dem vor dem Schritt e) Referenzbilder, die über- oder unterbelichtet sind, aussortiert und im Schritt e) nicht berücksichtigt werden.

4. Verfahren nach einem der obigen Ansprüche, bei dem eine Vergleichsprobe im Schritt c) die abzubildende Probe ist.

5. Verfahren nach einem der obigen Ansprüche, bei dem der Bildsensor einen linearen Detektionsbereich aufweist und im Schritt e) nur Bildpixel der Referenzbilder berücksichtigt werden, deren Wert im linearen Detektionsbereich des Bildsensors liegt.

6. Verfahren nach einem der obigen Ansprüche, bei dem laufend die im Schritt b) aufgenommenen Bilder als Referenzbilder im Schritt e) benutzt werden.

7. Verfahren nach einem der obigen Ansprüche, bei dem die Proben fluoreszierende Proben sind.

8. Verfahren nach einem der obigen Ansprüche, bei dem im Schritt e) jedem Bildpixel des Helligkeitskorrekturbildes mehrere Bildpixel des jeweiligen Referenzbildes zugeordnet sind.

9. Verfahren nach einem der obigen Ansprüche, bei dem jedem Bildpixel des Helligkeitskorrekturbildes ein erstes Bildpixel des jeweiligen Referenzbildes sowie zumindest ein zweites Pixel des jeweiligen Referenzbildes, das an das erste Pixel angrenzt, zugeordnet ist, wobei bevorzugt bei der Ermittlung der Bildpixelwerte des Helligkeitskorrekturbildes das zumindest eine zweite Pixel geringer gewichtet wird als das erste Pixel.

10. Verfahren nach einem der Ansprüche 1 bis 7, bei dem im Schritt e) jedem Bildpixel des Helligkeitskorrekturbildes genau ein Bildpixel des jeweiligen Referenzbildes zugeordnet ist.

11. Verfahren nach einem der obigen Ansprüche, bei dem im Schritt c) mindestens 100 unterschiedliche Bereiche bereitgestellt werden.

12. Verfahren nach einem der obigen Ansprüche, bei dem im Schritt c) als eine Vergleichsprobe die abzubildende Probe bereitgestellt wird, die gemäß der Schritte d) und e) ermittelte Helligkeitskorrekturbild auf Aufnahmen dieser Vergleichsprobe basiert und im Schritt f) dieses Helligkeitskorrekturbild zur Erzeugung des korrigierten Bildes der Probe benutzt wird.

13. Mikroskop mit
einer Beleuchtungseinheit (2, 3)
einer Abbildungsoptik (5),
einem Bildsensor (14) und
einer Steuereinheit (15), die so ausgebildet ist, dass sie die Schritte des Verfahrens gemäß eines der obigen Ansprüche durchführt.

14. Mikroskop nach Anspruch 13, bei dem das Mikroskop einen Beleuchtungsstrahlengang und einen Abbildungsstrahlengang aufweist, wobei ein Farbteiler (16), im Beleuchtungsstrahlengang ein Anregungsfilter (17) und/oder im Abbildungsstrahlengang ein Emissionsfilter (18) angeordnet sind/ist, um Fluoreszenzaufnahmen zu ermöglichen.

## Claims

1. Method for imaging a sample by means of a microscope which comprises at least an illumination unit, an imaging optical unit and an image sensor, wherein the following steps are carried out for imaging purposes:
a) a region of the sample is illuminated by illumination radiation by means of the illumination unit and
b) the illuminated sample region is imaged in a magnified fashion on the image sensor by means of the imaging optical unit and an image of the illuminated sample region is recorded using a predetermined number of image pixels,
**characterized in that**
c) a plurality of different regions of one or more comparison samples are provided,
d) a reference measurement is performed on each comparison sample region provided in step c), wherein the comparison sample region is in each case illuminated by illumination radiation by means of the illumination unit and imaged in a magnified fashion on the image sensor by means of the imaging optical unit and recorded as a reference image with the predetermined number of image pixels,
e) a brightness correction image with the predetermined number of image pixels is ascertained, in which brightness correction image the value for each image pixel of the brightness correction image is ascertained from the values of the assigned image pixels of the reference images, wherein the values of the assigned image pixels of the reference images are averaged, and
f) the image of the region of the sample recorded by means of steps a) and b) is corrected on the basis of the brightness correction image and output as a corrected image.

2. Method according to Claim 1, wherein, in step e), the values of the assigned image pixels are filtered and only the values of the assigned image pixels that satisfy a predetermined filter criterion for the filtering are considered when ascertaining the image pixel values of the brightness correction image.

3. Method according to either of the preceding claims, wherein, prior to step e), overexposed or underexposed reference images are rejected and not considered in step e) .

4. Method according to any one of the preceding claims, wherein a comparison sample in step c) is the sample to be imaged.

5. Method according to any one of the preceding claims, wherein the image sensor has a linear detection range and, in step e), only image pixels of the reference images whose value lies within the linear detection range of the image sensor are considered.

6. Method according to any one of the preceding claims, wherein the images recorded in step b) are used as reference images in step e) in an ongoing fashion.

7. Method according to any one of the preceding claims, wherein the samples are fluorescing samples.

8. Method according to any one of the preceding claims, wherein, in step e), a plurality of image pixels of the respective reference image are assigned to each image pixel of the brightness correction image.

9. Method according to any one of the preceding claims, wherein a first image pixel of the respective reference image and at least one second pixel of the respective reference image, which is adjacent to the first pixel, is assigned to each image pixel of the brightness correction image, wherein, preferably when ascertaining the image pixel values of the brightness correction image, the at least one second pixel is given less weight than the first pixel.

10. Method according to any one of Claims 1 to 7, wherein, in step e), exactly one image pixel of the respective reference image is assigned to each image pixel of the brightness correction image.

11. Method according to any one of the preceding claims, wherein, in step c), at least 100 different regions are provided.

12. Method according to any one of the preceding claims, wherein, in step c), the sample to be imaged is provided as a comparison sample, the brightness correction image ascertained as per steps d) and e) is based on recordings of this comparison sample and, in step f), this brightness correction image is used to produce the corrected image of the sample.

13. Microscope comprising
an illumination unit (2, 3),
an imaging optical unit (5),
an image sensor (14) and
a control unit (15) which is embodied in such a way that it carries out the steps of the method according to any one of the preceding claims.

14. Microscope according to Claim 13, wherein the microscope comprises an illumination beam path and an imaging beam path, wherein there is an arrangement of a colour splitter (16), an excitation filter (17) in the illumination beam path and/or an emission filter (18) in the imaging beam path in order to facilitate fluorescence recordings.

## Revendications

1. Procédé de reproduction d'un échantillon au moyen d'un microscope qui comporte au moins une unité d'éclairage, une optique de reproduction et un capteur d'image, le procédé de reproduction comprenant les étapes suivantes :
a) une région de l'échantillon est éclairée avec un rayonnement d'éclairage au moyen de l'unité d'éclairage et
b) la région d'échantillon éclairée est reproduite sur le capteur d'image en étant agrandie au moyen de l'optique de reproduction et une image de la région d'échantillon éclairée est capturée avec un nombre prédéterminé de pixels,
**caractérisé en ce que**
c) une pluralité de régions différentes d'un ou plusieurs échantillons de comparaison est fournie,
d) une mesure de référence est effectuée sur chaque région d'échantillon de comparaison fournie à l'étape c), la région d'échantillon de comparaison étant éclairée avec un rayonnement d'éclairage au moyen de l'unité d'éclairage et reproduite sur le capteur d'image en étant agrandie au moyen de l'optique de reproduction et capturée comme image de référence avec le nombre prédéterminé de pixels,
e) une image de correction de luminosité ayant le nombre prédéterminé de pixels est déterminée, dans laquelle la valeur pour chaque pixel de l'image de correction de luminosité est déterminée à partir des valeurs de pixels associés des images de référence, une moyenne des valeurs des pixels d'image associés des images de référence étant effectuée, et
f) l'image, capturée au moyen des étapes a) et b), de la région de l'échantillon est corrigée sur la base de l'image de correction de luminosité et délivrée comme image corrigée.

2. Procédé selon la revendication 1, dans lequel à l'étape e) les valeurs des pixels associés sont filtrées et seules les valeurs des pixels associés, qui satisfont à un critère prédéterminé du filtrage, sont prises en compte lors de la détermination des valeurs de pixels de l'image de correction de luminosité.

3. Procédé selon l'une des revendications précédentes, dans lequel avant l'étape e) des images de référence surexposées ou sous-exposées sont extraites et ne sont pas prises en compte à l'étape e).

4. Procédé selon l'une des revendications ci-dessus, dans lequel un échantillon de comparaison à l'étape c) est l'échantillon à reproduire.

5. Procédé selon l'une des revendications précédentes, dans lequel le capteur d'image comporte une région de détection linéaire et à l'étape e) seuls les pixels des images de référence sont pris en compte, dont la valeur se situe dans la région de détection linéaire du capteur d'image.

6. Procédé selon l'une des revendications précédentes, dans lequel les images capturées à l'étape b) sont utilisées en continu comme images de référence à l'étape e).

7. Procédé selon l'une des revendications ci-dessus, dans lequel les échantillons sont des échantillons fluorescents.

8. Procédé selon l'une des revendications ci-dessus, dans lequel à l'étape e) une pluralité de pixels de l'image de référence respective sont associés à chaque pixel de l'image de correction de luminosité.

9. Procédé selon l'une des revendications ci-dessus, dans lequel chaque pixel de l'image de correction de luminosité est associé à un premier pixel de l'image de référence respective et à au moins un deuxième pixel de l'image de référence respective qui est adjacent au premier pixel, de préférence lors de la détermination des valeurs de pixel de l'image de correction de luminosité au moins un deuxième pixel étant pondéré avec un poids inférieur à celui du premier pixel.

10. Procédé selon l'une des revendications 1 à 7, dans lequel à l'étape e) exactement un pixel de l'image de référence respective est associé à chaque pixel de l'image de correction de luminosité.

11. Procédé selon l'une des revendications ci-dessus, dans lequel au moins 100 régions différentes sont fournies à l'étape c).

12. Procédé selon l'une des revendications ci-dessus, dans lequel à l'étape c) l'échantillon à reproduire est fourni comme échantillon de comparaison, l'image de correction de luminosité déterminée selon les étapes d) et e) étant basée sur des captures de cet échantillon de comparaison et à l'étape f) cette image de correction de luminosité est utilisée pour générer l'image corrigée de l'échantillon.

13. Microscope comprenant
une unité d'éclairage (2, 3)
une optique de reproduction (5),
un capteur d'image (14) et
une unité de commande (15) qui est conçue pour exécuter les étapes du procédé selon l'une des revendications ci-dessus.

14. Microscope selon la revendication 13, dans lequel le microscope comporte un trajet de faisceau d'éclairage et un trajet de faisceau de reproduction, un séparateur de couleur (16), un filtre d'excitation (17) situé dans le trajet de faisceau d'éclairage et/ou un filtre d'émission (18) situé dans le trajet de faisceau de reproduction étant disposés de façon à permettre des captures d'image de fluorescence.
